# EUROPEAN PATENT APPLICATION

(11) **EP 4 169 875 A1**
(43) Date of publication of application: **26.04.2023**
(21) Application number: 21382953.4
(22) Date of filing: 22.10.2021
(51) Int. Cl.: C01B 3/04, B01J 19/12, B01J 35/00, F24S 23/77, C01B 13/02, F24S 20/25

(54) **PHOTOCATALYTIC UNIT FOR THE PRODUCTION OF HYDROGEN FROM WATER, AND SOLAR PLANT COMPRISING SAID PHOTOCATALYTIC UNIT**

(71) Applicant: Tewer Engineering, S.L., 28343 Valdemoro (Madrid) (ES)
(72) Inventor: Carrascosa Pérez, Marco Antonio, 28343 Valdemoro (Madrid) (ES); Roces Rodilla, Ignacio, 28343 Valdemoro (Madrid) (ES); Blazquez Serrano, Jose Manuel, 28343 Valdemoro (Madrid) (ES); Molina Parga, Alberto, 28343 Valdemoro (Madrid) (ES); Escudero Gudiel, Javier, 28343 Valdemoro (Madrid) (ES); Gonzalo Perez, Miguel, 28343 Valdemoro (Madrid) (ES)
(74) Representative: Temiño Ceniceros, Ignacio

(57) **Abstract**

The invention relates to a photocatalytic unit (1) for the production of hydrogen from water, comprising: (i) a photoreactor (2) comprising a plurality of tubes (3), wherein said tubes (3) internally comprise a photocatalyst, and are adapted for internally conducting a stream of water vapor; and absorbing external solar radiation focused on said tubes (3); and (ii) a plurality of solar reflectors (4) adapted for concentrating incident solar radiation on the tubes (3) of the photoreactor (2). Advantageously, the tubes (3) of the photoreactor (2) are arranged in a substantially vertical plane (7), and the solar reflectors (4) are arranged at both sides of said plane (7). The invention also relates to a solar plant for generating hydrogen comprising, at least, one photocatalytic unit (1) according to any of the embodiments herein described, and a water vapor stream source (21) connected to the photocatalytic unit (1).

## Description

### FIELD OF THE INVENTION

The present invention lies within the technical field of green energy production. More specifically, the invention relates to a solar plant for the photocatalytic production of 100% clean hydrogen from water.

### BACKGROUND OF THE INVENTION

The latest estimates from the International Energy Agency foresee an increase in global energy demand of about 25-30% until 2040. In an economy dependent on coal, natural gas, and oil, it would mean larger emissions of greenhouse gases to the atmosphere and, consequently, climate change worsening. For this reason, many countries around the world have set the goal of decarbonizing the planet by 2050, promoting the design of economical, durable, and efficient systems for clean energy conversion and storage.

The use of hydrogen as an alternative to fossil fuels has been encouraged by the fact that its combustion does not emit greenhouse gases, producing only water as a byproduct. In addition, hydrogen is one of the most abundant chemical elements on Earth, not in isolation but as part of other substances, such as coal, natural gas, and water.

To be an economical and sustainable alternative to fossil fuels, hydrogen must be produced from water using a renewable energy source ("clean hydrogen"). In this context, the solar-driven dissociation of water stands out as the most promising technology [Ngoh et al. Renew. Sust. Energ. Rev., 2012, 16 (9), 6782-6792], saving 830 million tons of carbon dioxide emissions per year.

To date, different approaches to the photocatalytic generation of hydrogen can be found in the prior art. International patent application WO 2009/158385 A2 describes a system and a process for thermal water dissociation using sunlight and calcined nanoparticles of an inorganic photocatalyst, comprising Cu, Al, Ti, Ga, Cd, Zn, W, Fe, Sn, Si, or any combination thereof. Specifically, the system comprises an array of solar concentrators, preferably parabolic troughs, that concentrate sunlight by a factor greater than 2 on a honeycomb-shaped bundle of hollow tubes internally coated with any of the photocatalysts previously described. International patent application WO 2020/039205 A1 refers to a similar hydrogen generation process but using a pipe-based photoreactor which is internally coated, preferably, with a graphene-based photocatalyst. United States patent application US 2006/0048808 A1 describes a more complex system, configured to collect solar energy, produce hydrogen from water in a photoreactor, and process that hydrogen for its storage.

While the success of hydrogen generation technologies using renewable energy sources may provide a solution to future energy and environmental problems, there are still many needs in this field that remain unsolved. Among these needs, probably the most important are finding photocatalytic processes which are not only more efficient, but also more economical for converting solar energy into energy stored as hydrogen gas, as well as finding improved photoreactors achieving higher production rates within solar energy-based hydrogen plants.

### BRIEF DESCRIPTION OF THE INVENTION

A first object of the present invention relates to a photocatalytic unit for the production of hydrogen from water, wherein said photocatalytic unit comprises:
- a photoreactor comprising a plurality of tubes, wherein said tubes internally comprise a photocatalyst, and are adapted for:
   - internally conducting a stream of water vapor; and
   - absorbing external solar radiation concentrated on said tubes; and
- a plurality of solar reflectors adapted for concentrating incident solar radiation on the tubes of the photoreactor.

Advantageously in the invention, the tubes of the photoreactor are arranged in a substantially vertical plane. Within the scope of interpretation of the present invention, "substantially vertical" will be understood as identically perpendicular to the ground, or within a range of variation of ± 25º respect to the vertical or, more preferably, within a ± 10% range of variation. This configuration of the tubes allows a more efficient and economical photocatalytic process by increasing the intercept factor of the photoreactor without requiring a secondary reflector; that is, the ratio of the energy intercepted by the tubes of the photoreactor to the energy reflected by the solar reflectors. Avoiding the need of a secondary reflector in the photocatalytic unit is a great advantage, since this element is, in general, expensive, difficult to install and its efficiency depends largely on their position with respect to the receiver tubes. Furthermore, unlike conventional photoreactors, said tubing arrangement makes the entire surface of the tubes accessible to solar radiation leading to improved hydrogen production rates by maximizing the interaction between sunlight and the photocatalyst within the tubes.

Solar reflectors are preferably arranged at both sides of the substantially vertical plane for higher efficiency, but other configurations would be also possible within the scope of the invention. In addition, the surface of the solar reflectors exposed to the solar radiation can be oriented in such a way that all of them reflect the incident solar radiation on a central tube of the photoreactor, homogenously over the whole set of tubes, or over a selection thereof. Thus, the thermal flux through the tubes of the photoreactor can be controlled more precisely.

In another preferred embodiment of the invention, the solar reflectors are installed at different heights over the ground to minimize energy losses due to cosine-effect and/or inter-row shading and, hence, maximize the amount of solar radiation concentrated on the photoreactor. The height of these solar reflectors can be fixed or adjustable through a control system.

In another preferred embodiment of the invention, the longitudinal axes of the tubes of the photoreactor are arranged forming an angle between -45º and 45º or, alternatively, between 65º and 115º with respect to the the ground within the substantially vertical plane. In this way, the vertical plane defined by the tubes can be implement through different tube geometries, depending on the specific needs within the solar plant, to optimize optical performance and, therefore, annual hydrogen production. Moreover, the inclination of the tubes can also be relevant for including the effect of gravity, convection, or other water vapor conduction factors in the photoreactor.

In another preferred embodiment of the invention, the photocatalytic unit further comprises a plurality of solar photovoltaic panels arranged at least at one side of the substantially vertical plane wherein the tubes are arranged. These panels can advantageously provide further energy generation means to power auxiliary units connected to the photocatalytic unit, such as electrically operated pumps or valves, compressors and tracking systems.

In another preferred embodiment of the invention, one or more of the tubes of the photoreactor comprise a plurality of fins attached to a core element arranged along a longitudinal axis of said tubes, wherein the fins and/or the core element are/is coated with a photocatalyst. In the context of the present invention, the expression "attached to" will be understood as any type of union or fixation between the core element and the fins, as well as a union in a single monolithic piece that includes both the core and the fins. Also, the expression "core element" will be understood as any hollow or solid tubular piece arranged inside a tube of the photoreactor.

Preferably, said fins are arranged longitudinally along the core element of the tubes, forming a flat-shaped configuration, a curved-shaped configuration, a helix-shaped configuration, or any combination thereof. More preferably, the fins and/or the core element comprise/s a metallic compound. Using said fins improves hydrogen production rate of the photoreactor thanks to the generation of a more turbulent flow of water vapor within the tubes. Said turbulent flow causes the desorption of oxygen from the surface of the photocatalyst, hence, increasing its catalytic performance.

In another preferred embodiment of the invention, at least a tube of the photoreactor comprises a plurality of longitudinal segment pairs connected through tubular coupling pieces. Each segment pair comprises a tube segment and a core segment comprising fins. The coupling pieces further comprise sealing gaskets, as well as threaded fixing means and secondary tubular coupling pieces adapted for connecting said segments pairs through their core segments. This embodiment allows an easier installation of the photoreactor, as well as a simpler manufacturing and transportation of its components.

Alternatively, at least a tube of the photoreactor can comprise a plurality of longitudinal segment pairs connected through welded bushings. Each segment pair comprises a tube segment and a core segment comprising fins. The core segments are supported on the welded bushings through clip supports, wherein the clip supports are clipped to the fins. This embodiment provides improved means for absorbing the thermal expansions of the inner core elements and their fins. Specifically, said clip supports act as springs to compensate the differential radial thermal expansions between the core and tube segments, but also as guiding means adapted for guiding the position of said core segments.

In another preferred embodiment of the invention, the photocatalyst comprises atomic quantum clusters (AQCs), typically made from silver or copper, supported on a semiconductor layer-based structure comprising titanium dioxide (TiO₂), zinc sulfide (ZnS), niobium pentoxide (Nb₂O₅), cerium oxide (CeO₂), cobalt oxide (Co₂O₃), or any combination thereof. Compared to conventional semiconductors-based photocatalyst for water splitting, this AQC-based photocatalyst offers a more efficient photoinduced charge separation, with higher interfacial charge-carrier transfer rate and lower probabilities of recombination.

A second object of the present invention relates to a solar plant for generating hydrogen by photocatalysis, said solar plant comprising at least one photocatalytic unit according to any of the embodiments herein described, and at least a water vapor stream source connected to the photocatalytic unit. Said water vapor stream source comprises, preferably, a thermal solar energy generation unit, which further comprises one or more parabolic troughs, heliostat tower collectors and/or Fresnel collectors. This thermal solar energy generation unit can produce either wet steam or superheated water, depending on the established operating conditions (i.e., temperature and pressure ranges) of the photoreactor.

In a preferred embodiment of the invention, wherein the thermal solar energy generation unit produces wet steam, the water vapor stream source further comprises a demister arranged upstream of the photocatalytic unit. Said demister converts the wet steam from the thermal solar energy unit into saturated water vapor and leads it to the photoreactor.

In another preferred embodiment of the invention, wherein the thermal solar energy generation unit produces superheated water, the water vapor stream source further comprises a water storage tank, to store the superheated water until further use, and a secondary system, preferably comprising a valve, a demister and a heat exchanger, to convert said superheated water into superheated steam before being thermally dissociated in the photocatalytic unit, as it enhances the efficiency of the photocatalytic unit.

In another preferred embodiment of the invention, said solar plant further comprises an oxygen gas separation unit arranged downstream of the photocatalytic unit to separate oxygen from the outlet stream of the photoreactor, which is a mixture of hydrogen, oxygen, and water vapor.

In another preferred embodiment of the invention, said solar plant further comprises a water separation unit arranged downstream of the photocatalytic unit to separate water vapor from the outlet stream of the photoreactor or from the outlet stream of the oxygen gas separation unit by condensation, recirculating the condensed water to the thermal solar energy generation unit.

In another preferred embodiment of the invention, said solar plant further comprises a hydrogen drying unit and/or a hydrogen purification unit arranged downstream of the photocatalytic unit, to remove any possible water traces and/or oxygen impurities present on the stream exiting the water separation unit.

In another preferred embodiment of the invention, said solar plant further comprises a hydrogen storage tank arranged downstream of the photocatalytic unit.

In the scope of the present invention, the expressions "comprise" or "comprising" should be interpreted, when applied to the relationship between a main element with respect to other secondary elements, as that said main element includes or contains said secondary elements, but without excluding others additional items.

### DESCRIPTION OF THE FIGURES

Figures 1a-1b show a side view and a perspective view of the photocatalytic unit of the invention in one of its preferred embodiments, respectively. Said photocatalytic unit is comprised by a photoreactor and a plurality of solar reflectors arranged at both sides of the photoreactor. The photoreactor further comprises a plurality of tubes arranged in a vertical plane. Said tubes, which internally comprise a photocatalyst, are adapted to internally conduct a water vapor stream and absorb the solar radiation concentrated on them by the solar reflectors.
Figures 2a-2b show a side view and a perspective view of the photocatalytic unit of the invention in another of its preferred embodiments, respectively. The set of tubes are arranged forming -25º respect to the vertical plane and the solar reflectors are installed at different heights over the ground.
Figures 3a-3b show a side view and a perspective view of the photocatalytic unit of the invention in another of its preferred embodiments, respectively. In addition to the photoreactor and the solar reflectors, the photocatalytic unit comprises a plurality of photovoltaic panels.
Figure 4a shows different configurations of the tubes of the photoreactor depending on the number of fins attached to the core of said tubes, as well as their arrangement over said core. Figure 4b shows different configurations of the fins. From top to bottom: anti-clockwise helix-shaped fin, flat-shaped fin, and clockwise helix-shaped fin. Figure 4c shows a tube of the photoreactor combining the three aforementioned configurations over its core.
Figures 5a-5b show different views of a tube of the photoreactor in one of its preferred embodiments. Said tube comprises two longitudinal segment pairs connected through a tubular coupling piece. Each segment pair comprises a tube segment and a core segment comprising fins. The coupling piece further comprises fixing means adapted for attaching an end of a core segment to a tubular coupling piece.
Figures 6a-6c show different views of a tube of the photoreactor in another of its preferred embodiments. Said tube comprises two longitudinal segment pairs connected through welded bushings by a glass-metal connection, wherein each segment pair comprises a tube segment and a core segment comprising fins. The core segments are supported on the bushings through clip supports, wherein the clip supports are clipped to the fins.
Figure 7 shows the flow diagram of the solar plant of the invention in one of its preferred embodiments. Specifically, the solar plant comprises parabolic troughs, a demister, a photocatalytic unit according to any of the embodiments herein described, an oxygen gas separation unit, a water separation unit, a hydrogen drying unit, a hydrogen purification unit, and a hydrogen storage tank. In this case, the parabolic troughs produce wet steam.
Figure 8 shows the flow diagram of the solar plant of the invention in another of its preferred embodiments. Unlike the embodiment shown in Figure 7, this solar plant comprises a heliostat tower collector instead of parabolic troughs to convert water into wet steam.
Figure 9 shows the flow diagram of the solar plant of the invention in another of its preferred embodiments. Unlike the embodiment shown in Figure 7, this solar plant comprises Fresnel solar collectors instead of parabolic troughs to convert water into wet steam.
Figure 10 shows the flow diagram of the solar plant of Figure 7, further comprising a water storage tank, a valve, and a heat exchanger arranged upstream of the photocatalytic unit to convert the superheated water produced by the parabolic troughs into saturated water vapor.
Figure 11 shows the flow diagram of the solar plant of Figure 8, further comprising a water storage tank, a valve and a heat exchanger arranged upstream of the photocatalytic unit to convert the superheated water produced by the heliostat tower collector into saturated water vapor.
Figure 12 shows the flow diagram of the solar plant of Figure 9, further comprising a water storage tank, a valve and a heat exchanger arranged upstream of the photocatalytic unit to convert the superheated water produced by the Fresnel collectors into saturated water vapor.

### NUMERICAL REFERENCES USED IN THE DRAWINGS

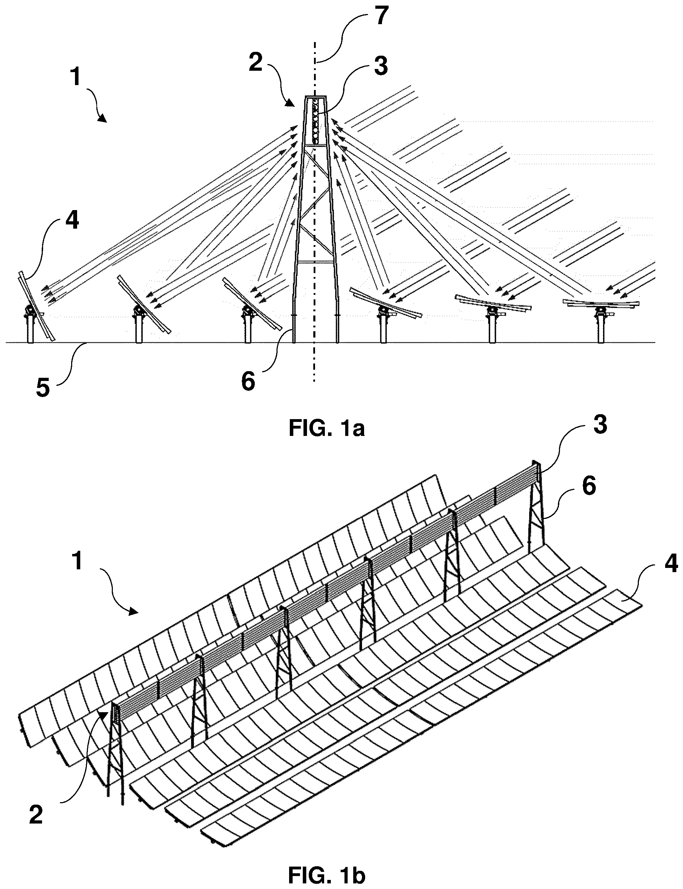

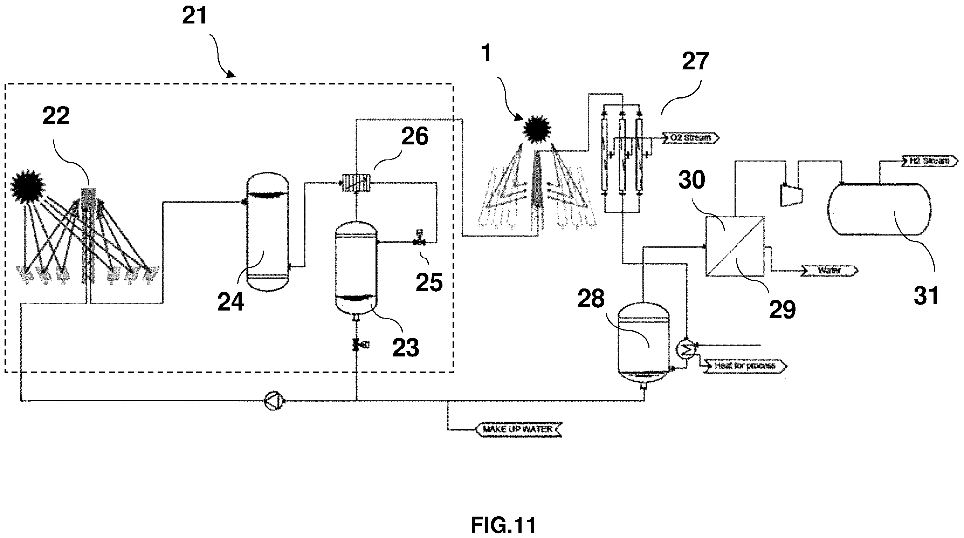

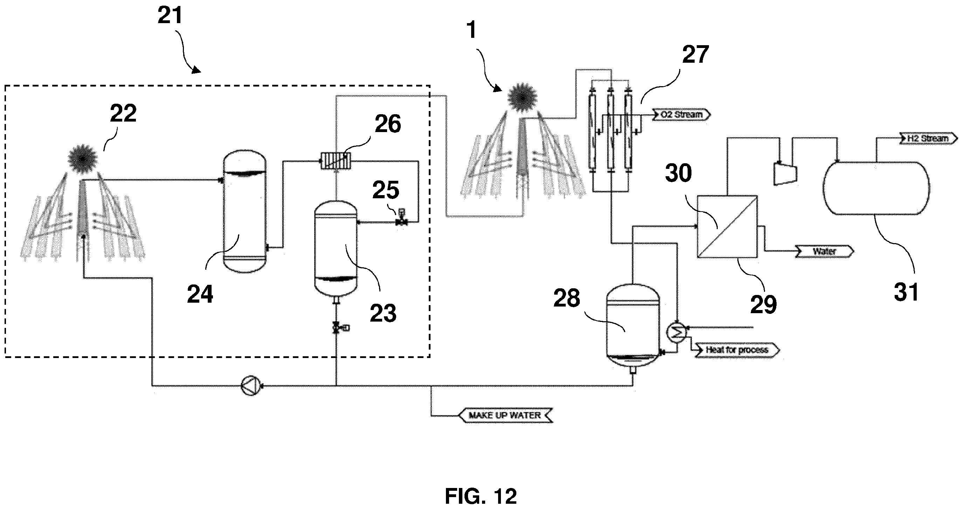

In order to provide a better understanding of the technical features of the invention, the referred Figures 1-12 are accompanied by a series of numerical references which, with an illustrative and non-limiting character, are hereby represented:

| | |
|---|---|
| 1 | Photocatalytic unit |
| 2 | Photoreactor |
| 3 | Tube |
| 4 | Solar reflector |
| 5 | Ground |
| 6 | Scaffolding structure |
| 7 | Substantially vertical plane |
| 8 | Photovoltaic panels |
| 9 | Fins |
| 10 | Core element of the tube |
| 11, 11' | Segment pairs |
| 12 | Tubular coupling piece |
| 13 | Tube segment |
| 14 | Core segment |
| 15 | Sealing gasket |
| 16 | Threaded fixing means |
| 17 | Secondary tubular coupling piece |
| 18 | Welded bushing |
| 19 | Clip support |
| 20 | Inter-pair space |
| 21 | Water vapor stream source |
| 22 | Thermal solar energy generation unit |
| 23 | Demister |
| 24 | Water storage tank |
| 25 | Valve for flashing |
| 26 | Heat exchanger |
| 27 | Oxygen gas separation unit |
| 28 | Water separation unit |
| 29 | Hydrogen drying unit |
| 30 | Hydrogen purification unit |
| 31 | Hydrogen storage tank |

### DETAILED DESCRIPTION OF THE INVENTION

As described in preceding paragraphs, a first object of the present invention relates to a photocatalytic unit (1) for the production of hydrogen from water vapor. This unit (1) is preferably conceived as a main reactor means for producing hydrogen by photocatalysis in a solar plant or solar field. Thus, generally a water vapor source means will be connected to the photocatalytic unit (1), where the action of a light source (preferably, concentrated sunlight) on a photocatalytic material will produce hydrogen, which can be later purified, dried, and stored as a source for clean energy production.

In a preferred embodiment of the invention according to Figures 1a-1b of this document, the photocatalytic unit (1) comprises at least a photoreactor (2) structure, configured with a plurality of tubes (3) that internally comprise a photocatalyst. The main function of said tubes (3) is to conduct a stream of water vapor, and to absorb external radiation concentrated on them (3), preferably concentrated sunlight, so that a water splitting reaction (2H₂O → 2H₂ + O₂) occurs inside them (3). To allow the interaction between sunlight and the photocatalyst, the tubes (3) are typically made of a high transmittance material, like borosilicate glass.

Preferably, the photocatalyst comprises atomic quantum clusters (AQCs), typically made from silver or copper, supported on a semiconductor layer-based structure comprising titanium dioxide (TiO₂), zinc sulfide (ZnS), niobium pentoxide (Nb₂O₅), cerium oxide (CeO₂), cobalt oxide (Co₂O₃), or any combination thereof. Compared to conventional semiconductors-based photocatalyst for water splitting, this AQC-based photocatalyst offers a more efficient photoinduced charge separation, with higher interfacial charge-carrier transfer rate and lower probabilities of recombination. Specifically, said AQC-based photocatalyst presents a solar-to-hydrogen (STH) efficiency between 60% and 70%, absorbing up to 77% of the complete solar spectrum.

The photocatalytic unit (1) also comprises a plurality of solar reflectors (4) adapted for concentrating incident solar radiation on the tubes (3) of the photoreactor (2). These solar reflectors (4) are typically configured as solar concentrators used in thermal solar applications, such as Fresnel reflectors and parabolic troughs, preferably equipped with tracking systems to follow the course of the sun. In addition to triggering water splitting inside the tubes (3), the concentrated sunlight by said solar reflectors (4) maintains a stable temperature inside the photoreactor (2). This prevents both water vapor condensation and reversible reactions, enhancing hydrogen production rates. Typically, concentration factors of said solar reflectors (4) vary between 10 and 40 suns.

In different embodiments of the invention, the number of tubes (3) arranged in each photoreactor (2) will generally vary between two and thirty. And, more preferably, the photoreactor (2) will comprise between five and fifteen tubes (3). However, any arbitrary number of tubes (3) can be used within the invention, depending on the specific size of the solar field formed by the plurality of solar reflectors (4) and the concentration factors thereof. The size of the solar field will also normally affect the position of the tubes (3) above the ground (5) which, in a preferred embodiment of the invention, will be arranged at a height of between 5 m and 30 m above the ground (5) and, more preferably, between 5 m and 15 m. To this end, the tubes (3) are preferably supported by an elevated scaffolding structure (6). The diameter of the tubes will be generally comprised between 30 mm and 100 mm, and, more preferably, between 30 mm and 70 mm.

Advantageously in the invention, the tubes (3) of the photoreactor (2) are arranged in a substantially vertical plane (7), and the solar reflectors (4) are arranged at both sides of said plane (7) (as shown in Figures 1-3). As previously disclosed, the term "substantially vertical" applied to the plane (7) will be understood as identically perpendicular to the ground (5), or within a range of variation of ±25% respect to the vertical or, more preferably, within a ±10% range of variation. The position of this substantially vertical plane (7) respect to the vertical can be fixed, or adjustable by an auxiliary control system throughout the day, season, etc. to maximize the amount of solar radiation that bathe the surface of the tubes (3).

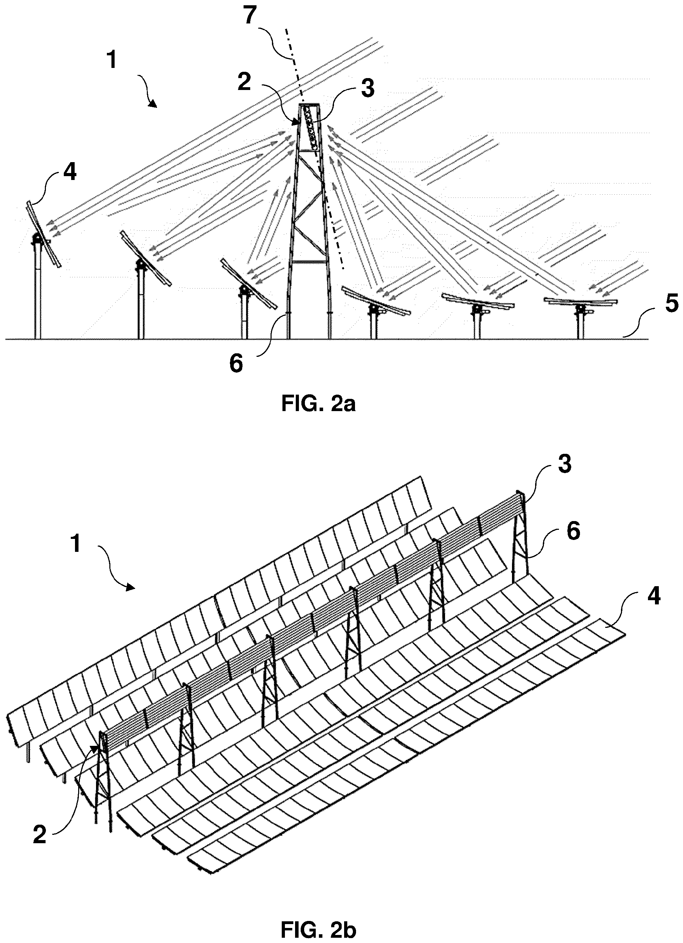

Additionally, depending on the specific configuration of the tubes (3) and their inclination with respect to the vertical, the solar reflectors (4) can be arranged at different heights above the ground (5) along the solar field. This minimizes energy losses due to cosine-effect and/or inter-row shading, so that the efficiency of solar concentration of said solar reflectors (4) can be as high as possible. An example according to this embodiment is shown in Figures 2a-2b, wherein the plane (7) is inclined with respect to the vertical, and the reflectors (4) arranged at the left side of the photoreactor (2) with respect to that plane (7) are installed are higher positions than the reflectors (4) arranged at the right side of the plane (7).

In different executions of the invention, the longitudinal axes of the tubes (3) of the photoreactor (2) can be arranged with different orientations within the substantially vertical plane (7). For example, they can have north-south orientation, east-west orientation, inclined or curved orientations, or any combination thereof, provided that they are arranged defining said substantially vertical plane (7). Preferably, the longitudinal axes of the tubes form an angle between -45º and 45º or, alternatively, between 65º and 115º with respect to the ground (5) within the substantially vertical plane (7). In this way, the vertical plane (7) defined by the tubes (3) can be implement through different tube geometries, depending on the specific needs within the solar plant, to optimize optical performance and, therefore, annual hydrogen production. Moreover, the inclination of the tubes (3) can also be relevant for including the effect of gravity, convection, or other water vapor conduction factors in the photoreactor (2). More preferably, the tubes (3) comprise straight segments arranged parallel within the substantially vertical plane (7) (as depicted in Figures 1b, 2b, and 3b).

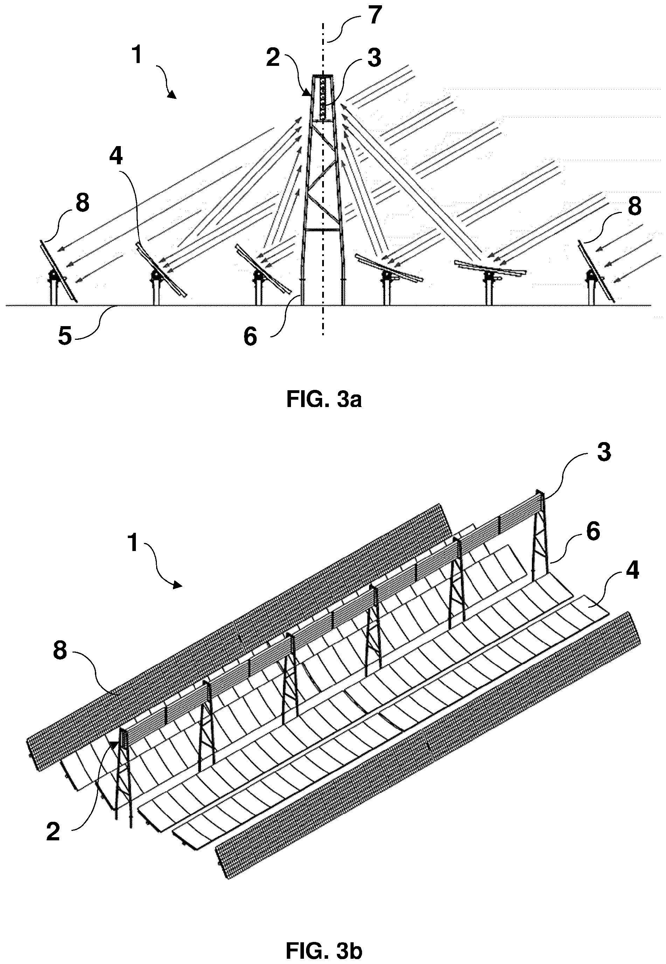

In further embodiments of the invention, the photocatalytic unit (1) can also comprise a plurality of solar photovoltaic panels (8) arranged along the solar field, for example, at one side of the substantially vertical plane (7). These panels (8) can advantageously provide further energy generation means to power the photocatalytic unit (1) (for example, electrically operated pumps or valves, the tracking systems of the reflectors (4), etc.). In the example shown in Figures 3a-3b, one row of photovoltaic panels (8) is arranged at each side of the vertical plane (7). In preferred executions under these embodiments, the panels (8) can also be installed within solar-tracking systems (single axis, dual axis, etc.).

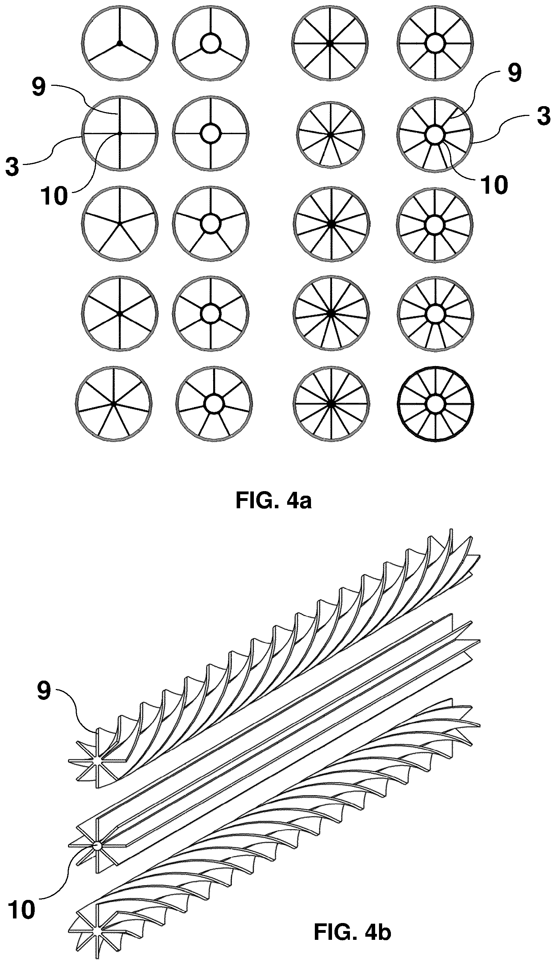

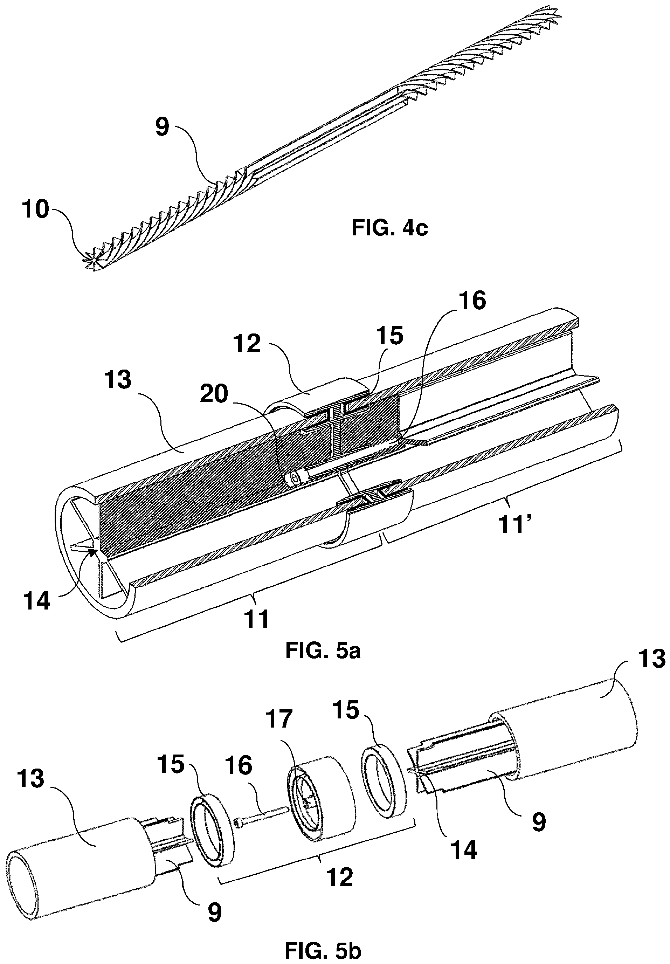

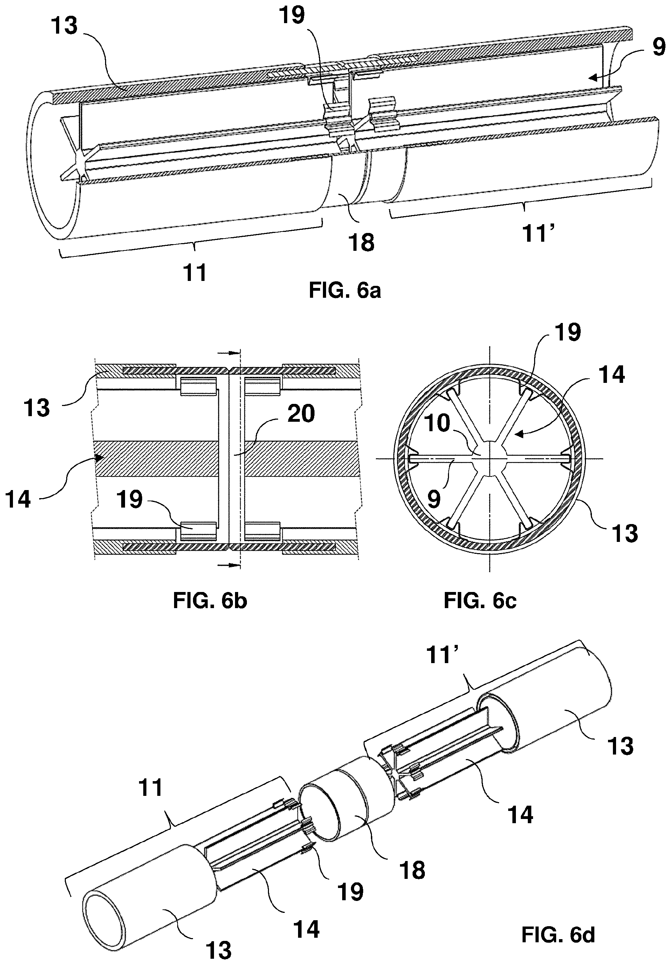

The internal structure of the tubes (3) is also relevant for improving the performance of the photoreactor (2). To this end, in a preferred embodiment of the invention depicted in Figures 4a-4c, one or more of the tubes (3) comprise a plurality of fins (9) attached to a core (10) element arranged along a longitudinal axis of said tube/s (3). Said fins (9) and core elements (10) provide extended surfaces where the photocatalyst can be deposited, thereby maximizing the yield rates of photocatalytic reactions produced when the sunlight is focused in the tubes (3). Moreover, the fins (9) can be arranged longitudinally along the core (10) element of the tubes (3), forming a flat-shaped configuration or a curved-shaped configuration, such as a helix (see Figure 4b, depicting anti-clockwise helix-shaped, flat-shaped, and clockwise helix-shaped fins (9)), or any combination thereof (Figure 4c). Using any of these configurations for the fins favors the desorption of oxygen from the surface of the photocatalyst, thanks to the generation of more turbulent flow of water vapor within the tubes (3). This improves the catalytic performance of the photocatalyst and, thereby, the hydrogen production rate by the photoreactor (2). Preferred specific embodiments of finequipped tubes (3) with improved means for absorbing thermal expansions of their inner core elements (10) and fins (9) are shown in Figures 5 and 6.

Figures 5a-5b show different views of a tube (3) according to a preferred embodiment of the invention, wherein said tube (3) comprises a plurality of longitudinal segment pairs (11, 11') connected through tubular coupling pieces (12). Thanks to said coupling, the tubes (3) can be made arbitrarily long by joining a set of segment pairs (11, 11') of reduced extension, which is easier to manufacture and transport. Preferably in this embodiment, each segment pair (11, 11') comprises a tube segment (13) and a core segment (14) comprising fins (9), and the tubular coupling pieces (12) further comprises sealing gaskets (15), as well as threaded fixing means (16) and secondary tubular coupling pieces (17) adapted for supporting the core segments (14). The interior surface of the core segment (14) of one of the segment pair (11') is threaded so as to receive the threaded fixing means (16) through the secondary tubular coupling piece (17). Moreover, to avoid thermal fracturing in the tube segments (13), the tubular coupling pieces (12) and the sealing gaskets (15) comprise materials with thermal coefficients like that of the tube segments (13). Typically, the tubular coupling pieces (12) are of a ceramic-based material, like alumina and zirconia, and the sealing gaskets (15) preferably comprise a material resistant to high temperatures, such as graphite and polyetheretherketone. Thanks to that, these elements (12, 13, 15) will expand proportionally in all radial directions when the stream of water vapor passes through the segment pairs (11, 11').

Figures 6a-6d show different views of a tube (3) according to a further preferred embodiment of the invention, wherein said tube (3) comprises a plurality of longitudinal segment pairs (11, 11') connected through welded bushings (18). Said welded bushings (18) are typically of materials with low coefficient of thermal expansion, like, for example, iron-nickel alloys or iron-nickel-cobalt alloys. Preferably in this embodiment, each segment pair (11, 11') comprises a tube segment (13) and a core segment (14) comprising fins (9), wherein the core segments (14) are advantageously supported on the welded bushings (18) through clip supports (19), which are clipped to the fins (9). Said clip supports (19) act as springs to compensate the differential radial thermal expansion between the core segments (14) and the tube segments (13). Moreover, these clips supports (19) are also guiding means for positioning the core segments (14), absorbing the differential longitudinal thermal expansion between said core (14) and tube (13) segments by sliding over the interior surface of the welded bushings (18). Both radial and longitudinal thermal loads absorbed by the clip supports (19) are further transferred to the welded bushings (18) instead to the tube segments (13). It is due to the difference in diameter between them (18, 13). This increases the fracture toughness of the tube (3) and reduces the maintenance cost of the photocatalytic unit (1).

More preferably, in any of the tube preferred embodiments described above, the plurality of longitudinal segment pairs (11, 11') is arranged such that there is a free inter-pair space (20) adapted for absorbing the longitudinal thermal expansions of the core segments (14) within the tube (3).

A second object of the invention relates to a solar plant for the photocatalytic production of hydrogen from water, comprising at least one photocatalytic unit (1) according to any of the embodiments described in the present document, and at least a water vapor stream source (21) connected to the photocatalytic unit (1).

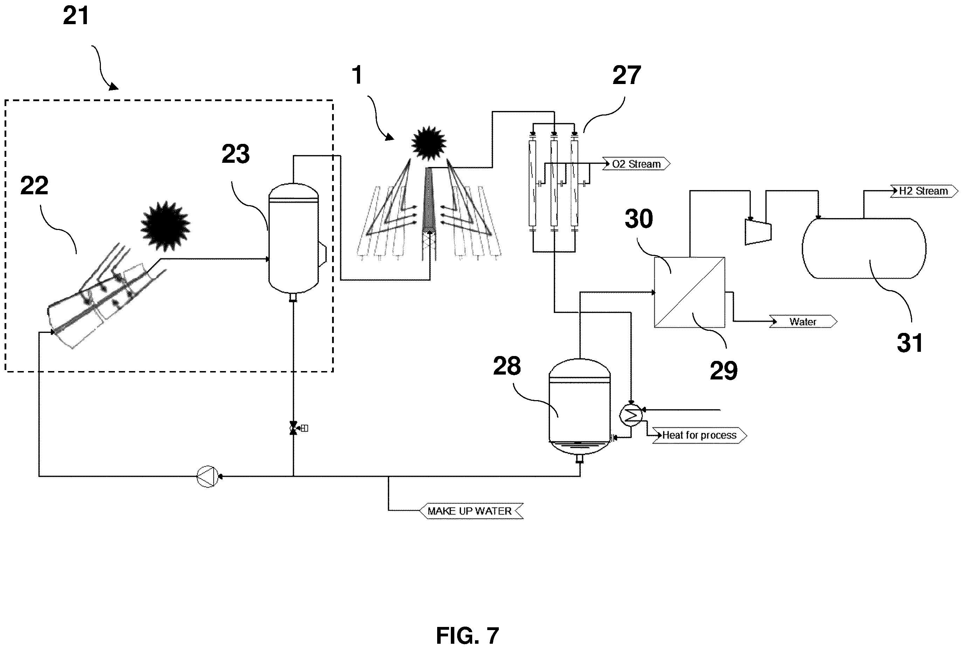

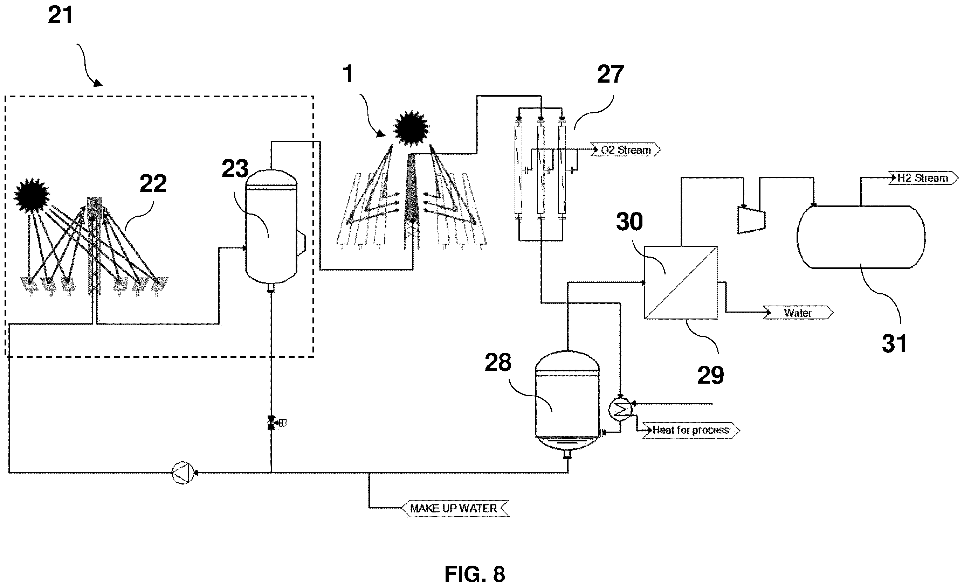

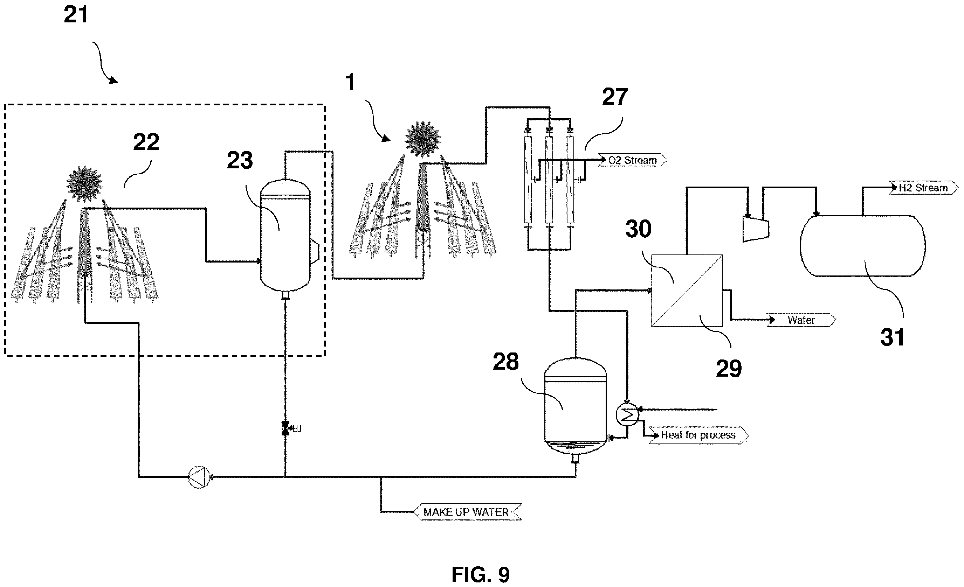

The water vapor stream source (21) preferably comprises a thermal solar energy generation unit (22), which further comprises one or more parabolic troughs (Figure 7), heliostat tower collectors (Figure 8) and/or Fresnel collectors (Figure 9). This thermal solar energy generation unit (22) produces either wet steam or superheated water, depending on the established operating conditions of the photoreactor (2).

In case that the thermal solar energy generation unit (22) produces wet stream, the solar plant can further comprise a demister (23) arranged upstream of the photocatalytic unit (1). The demister (23) separates the fine water droplets present in the wet steam provided by the thermal solar energy generation unit (22), converting said wet steam into saturated water vapor (see Figures 7-9).

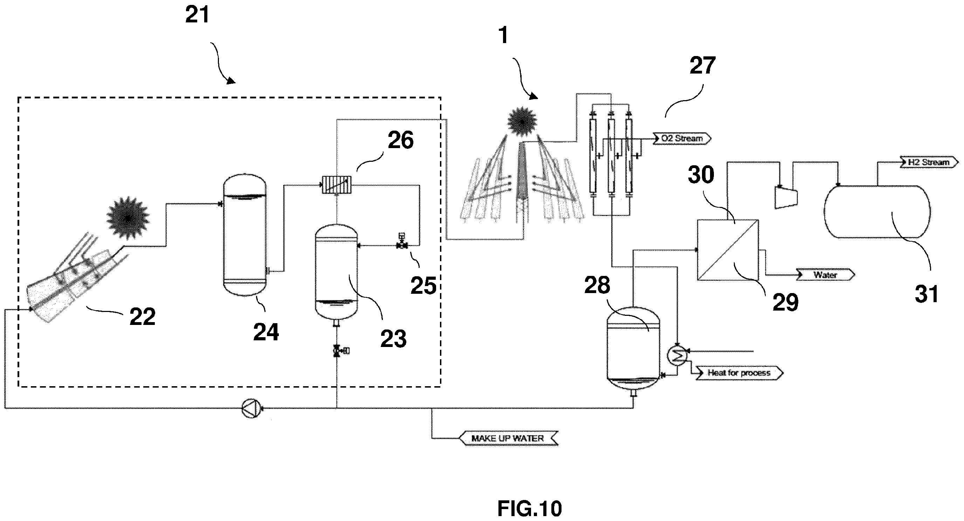

In case that the thermal solar energy generation unit (22) produces superheated water, the water vapor stream source (21) further comprises a demister (23), a water storage tank (24), a valve (25), and a heat exchanger (26) (see Figures 10-12). The superheated water produced by the thermal solar energy generation unit (22) is stored in the water storage tank (24) until it is led to the demister (23) through the valve (25). Said valve (25) reduces the pressure of the superheated water stream, converting it in flash steam. After passing thought the demister (23), the obtained saturated water vapor is heated up in the heat exchanger (26) by transferring part of the heat of the superheated water stream exiting the water storage tank (24). Thus, the saturated steam is converted into superheated steam. The superheated steam is then directed to the plurality of tubes (3) of the photoreactor (2), wherein its photocatalytic splitting into oxygen and hydrogen takes place.

Optionally, the hydrogen produced in the photoreactor (2) can be purified, dried, and stored as a source for clean energy production. The solar plant can further comprise then the following units:
- an oxygen gas separation unit (27), to separate the oxygen from the outlet stream of the photoreactor (2);
- a water separation unit (28), to separate the water from the outlet stream of the photoreactor (2) or from the outlet stream of the oxygen gas separation unit (27) by condensation;
- a hydrogen drying unit (29) and/or a hydrogen purification unit (30), to remove water traces and/or oxygen impurities present on the stream exiting the water separation unit (28); and/or
- a hydrogen storage tank (31), to store the dried and purified hydrogen.

Therefore, the standard operating procedure of the solar plant of the invention according to any of the embodiments herein described comprises, at least, performing the following steps:
a) providing a water vapor stream by means of the water vapor stream source (21);
b) conducting the water vapor stream through the tubes (3) of the photoreactor (1); and,
c) concentrating solar radiation on the tubes (3) of the photoreactor (2) by means of the solar reflectors (4) to activate the photocatalyst located inside the tubes (3) and, consequently, trigger the splitting of water vapor molecules into hydrogen and oxygen inside the tubes (3).

## Claims

1. Photocatalytic unit (1) for the production of hydrogen from water, comprising:
- a photoreactor (2) comprising a plurality of tubes (3), wherein said tubes (3) internally comprise a photocatalyst, and are adapted for:
- internally conducting a stream of water vapor; and
- absorbing external solar radiation concentrated on said tubes (3); and
- a plurality of solar reflectors (4) adapted for concentrating incident solar radiation on the tubes (3) of the photoreactor (2);
**characterized in that** the tubes (3) of the photoreactor (2) are arranged in a substantially vertical plane (7), and wherein the solar reflectors (4) are arranged at both sides of said plane (7).

2. Photocatalytic unit (1) according to the preceding claim, wherein the solar reflectors (4) are arranged at different heights above the ground (5).

3. Photocatalytic unit (1) according to any of the preceding claims, wherein the longitudinal axis of the tubes (3) of the photoreactor (2) are arranged:
- forming an angle between -45º and 45º with respect to the ground (5) within the substantially vertical plane (7); or
- forming an angle between 65º and 115º with respect to the ground (5) within the substantially vertical plane (7).

4. Photocatalytic unit (1) according to any of the preceding claims, further comprising a plurality of solar photovoltaic panels (8) arranged at least at one side of the substantially vertical plane (7) wherein the tubes (3) are arranged.

5. Photocatalytic unit (1) according to any of the preceding claims, wherein one or more of the tubes (3) of the photoreactor (1) comprises a plurality of fins (9) attached to a core (10) element arranged along a longitudinal axis of said tubes (3), wherein the fins (9) and/or the core (10) element are/is coated with a photocatalyst.

6. Photocatalytic unit (1) according to the preceding claim, wherein the fins (9) are arranged longitudinally along the core (10) element of the tubes (3), forming a flat-shaped configuration, a curved-shaped configuration, a helix-shaped configuration, or any combination thereof.

7. Photocatalytic unit (1) according to the preceding claim, wherein:
- at least a tube (3) comprises a plurality of longitudinal segment pairs (11, 11') connected through tubular coupling pieces (12);
- each segment pair (11, 11') comprises a tube segment (13) and a core segment (14) comprising fins (9); and
- the tubular coupling pieces (12) further comprise sealing gaskets (15), as well as threaded fixing means (16) and secondary tubular coupling pieces (17) adapted for connecting the segments pairs (11, 11') through the core segments (14).

8. Photocatalytic unit (1) according to claim 6, wherein:
- at least a tube (3) comprises a plurality of longitudinal segment pairs (11, 11') connected through welded bushings (18);
- each segment pair comprises a tube segment (13) and a core segment (14) comprising fins (9);
- the core segments (14) are supported on the welded bushings (18) through clip supports (19), wherein the clip supports (19) are clipped to the fins (9).

9. Photocatalytic unit (1) according to any of the preceding claims, wherein the photocatalyst comprises atomic quantum clusters supported on a semiconductor layer-based structure comprising titanium dioxide (TiO₂), zinc sulfide (ZnS), niobium pentoxide (Nb₂O₅), cerium oxide (CeO₂), cobalt oxide (Co₂O₃), or any combination thereof.

10. Solar plant for generating hydrogen comprising:
- at least one photocatalytic unit (1) according to any of the preceding claims;
- at least a water vapor stream source (21) connected to the photocatalytic unit (1).

11. Solar plant according to the preceding claim, wherein the water vapor stream source (21) connected to the photocatalytic unit (1) comprises a thermal solar energy generation unit (22).

12. Solar plant according to the preceding claim, wherein the thermal solar energy generation unit (22) comprises one or more parabolic troughs, heliostat tower collectors, Fresnel collectors, or any combination thereof.

13. Solar plant according to claims 11-12, wherein the water vapor stream source (21) further comprises a demister (23) arranged upstream of the photocatalytic unit (1) and downstream of the thermal solar energy generation unit (22).

14. Solar plant according to claims 11-12, wherein the water vapor stream source (21) further comprises a water storage tank (24), a valve for flashing (25), a demister (23) and a heat exchanger (26) arranged upstream of the photocatalytic unit (1) and downstream of the thermal solar energy generation unit (22).

15. Solar plant according to any of claims 10-14, further comprising:
- an oxygen gas separation unit (27); and/or
- a water separation unit (28); and/or
- a hydrogen drying unit (29); and/or
- a hydrogen purification unit (30); and/or
- a hydrogen storage tank (31)
arranged downstream of the photocatalytic unit (1).
